Europäisches Patentamt

European Patent Office

Office européen des brevets

(19)

(11) Publication number: **0 023 111**

**A1**

(12) **EUROPEAN PATENT APPLICATION**

(21) Application number: **80302331.6**

(22) Date of filing: **10.07.80**

(51) Int. Cl.³: **B 01 D 15/00**
**H 01 F 27/10**

(30) Priority: **18.07.79 US 58454**

(43) Date of publication of application:
**28.01.81 Bulletin 81/4**

(84) Designated Contracting States:
**AT BE CH DE FR GB IT LI LU NL SE**

(71) Applicant: **RTE CORPORATION**
**1900 East North Street**
**Waukesha, Wisconsin, 53186(US)**

(72) Inventor: **Olmsted, John H.**
**1616 North El Dorado Drive**
**New Berlin Wisconsin 53151(US)**

(74) Representative: **Bradbrook, Geoffrey William et al,**
**Raworth, Moss & Cook 36 Sydenham road**
**Croydon, CR0 2EF(GB)**

(54) A halogenated organic contaminant absorption process and an apparatus for carrying out the process.

(57) A process for removing a halogenated organic contaminant from a liquid comprises placing a chemical filtering medium in communication with the liquid and allowing the liquid to continuously communicate with it. The medium is capable of selectively absorbing the contaminant with minimum interaction with the liquid.

Particles of polychloroprene, chlorinated butadienes, and polymers and copolymers of polyvinyl chloride are suitable filtering media. Apparatus for carrying out the process comprises a storage reservoir containing a functional sub-assembly such as a transformer core-coil assembly, a hydraulic piston a heat exchange assembly immersed in the liquid in the storage reservoir.

-1-

"A HALOGENATED ORGANIC CONTAMINANT ABSORPTION PROCESS AND AN APPARATUS FOR CARRYING OUT THE PROCESS"

The invention relates to a contaminant absorption process and an apparatus for carrying out the process and is applicable to electrical, hydraulic, fluid processing and heat transfer apparatus such as transformers, hoists, and heat exchangers, respectively, which include a functional liquid.

For more than 40 years, electrical, hydraulic, and heat transfer apparatus for use in or adjacent to occupied structures have been constructed with a functional liquid which is predominantly polychlorinated biphenyl, commonly called PCB's. The PCB's which have excellent fire-resistant characteristics were chosen for these applications because of their electrical and thermal properties.

The PCB's, are toxic, i.e., they have the capacity to produce injury or death in humans or animals if directly or indirectly ingested. Because of their toxicity and high chemical stability, their handling and use in the United States of America has been severely restricted by the Federal Toxic Substances Control Act, passed in 1976. Subsequent administrative rulings by the U.S. Environmental Protection Agency have banned the manufacture of all apparatus containing PCB's and further restricted their continued use and disposal. Specific prohibitions have been promolgated against certain classes of maintenance and disposal of PCB contaminated equipment, as well as PCB's themselves.

Many units of such equipment were intended to contain non-contaminated liquids, such as conventional naphthenic oil in electrical transformers and glycol-water solutions in heat exchangers. However, during the manufacturing or maintenance processes performed upon these units, they became contaminated with unacceptable concentrations of PCB.

Alternative liquids have been developed as substitutes for PCB-based liquids for each of these applications. It would be environmentally desirable to drain and refill existing PCB-filled and PCB-contaminated apparatus with an acceptable non-toxic, fire-resistant liquid, such as high molecular-weight, saturated hydrocarbon oil. For example, an existing PCB-filled transformer cannot be rebuilt under the existing regulations, and must instead be drained and disposed of by a combination of incineration and chemical land-fill processes. The draining and refilling of such apparatus with an acceptable substitute liquid, however, immediately results in the contamination of the new liquid by the continuous leaching into the liquid of residual PCB's from the solid components contained in the apparatus. The regulatory requirements, as low as 50 parts per million of PCB, make it too costly to repeat the draining and refilling process as a way of obtaining an uncontaminated unit.

PCB's and other chlorinated organic materials are found in the effluent of waste-water treatment facilities. These toxic materials are ingested by various aquatic animals, where they are concentrated as they progress up the food chain to eventually threaten human health.

According to one aspect of the invention there is provided a process of removing a halogenated organic contaminant from a liquid contained in a vessel characterised by placing in the vessel a chemical filtering medium capable of selectively absorbing said contaminant with minimum interaction with said liquid and allowing said liquid to communicate continuously with said medium.

According to another aspect of the invention there is provided an apparatus comprising a storage vessel containing a liquid, a functional subassembly immersed in said liquid, said liquid containing a halogenated organic contaminant, characterised by a selectively absorbent filtering medium disposed in continuous communication with said liquid, said filtering medium being selected to absorb the contaminant with minimum interaction with the liquid.

In one embodiment, the apparatus consists of a tank containing a functional liquid, such as hydrocarbon oil or water, and a functioning subsystem, such as a transformer core-coil assembly, hydraulic pistons, heat-exchange surfaces, or waste water agitators, which are immersed in the liquid. If there were PCB's, or other chlorinated organic liquids, in the liquid they would impregnate the immersed functional subassembly. If the contaminated liquid is removed, any residual contaminant continuously leaches into the new liquid. The contaminant can be removed from the functional liquid by continuously passing the functional liquid through a selectively absorbent material, which material is selected to chemically absorb the chlorinated organic contaminant with minimum interaction with the functional liquid. Chlorinated elastomers such as polychloroprene, have been found to be excellent filtering media for chlorinated organic liquids and are economically attractive.

Embodiments of the invention will now be described by way of example with reference to the following Example.

EXAMPLE

A tank is filled with a functional liquid and a functional subassembly is immersed in the liquid. The functional liquid is contaminated with a chlorinated organic liquid, such as a PCB either by residual contaminants in the subassembly or the introduction of contaminants by use. Contaminants such as chlorinated benzenes and chlorinated pesticides can also be absorbed by means of the filtering medium disclosed herein.

The functional subassembly is a transformer core-coil assembly, a hydraulic piston, a heat exchange assembly, or a waste water agitator. The functional subassembly is immersed in a functional liquid such as a dielectric or insulating fluid or water.

It has been found that contamination of organic liquid with PCB's can be reduced to less than 50 parts per million by means of a chemical filtering medium containing a suitable chlorinated elastomer. Much lower concentrations of PCB's are obtainable with inorganic liquids, due to their reduced affinity for chlorinated organic compounds.

In this Example, the filtering medium consists of small particles of chlorinated elastomeric polymer, such as polychloroprene, (NEOPRENE) obtained by grinding and separating the elastomer to control the particle size. Particles which pass through a 20 mesh screen and are retained by a 50 mesh screen have been used successfully. The filtering medium can alternatively be selected from chlorinated butadienes, and polymers and copolymers of polyvinyl chloride.

The filter medium is disposed within the tank, such that liquid naturally circulates through it by thermal-siphon action. Alternatively, it is arranged to allow the liquid to be pumped through the filtering medium.

In this regard the filtering medium may be continuously exposed to the liquid by containing the filtering medium in an external tank and allowing the liquid to flow through the filtering medium. Alternative means can be provided to continuously pump the liquid between the external tank and the tank containing the liquid.

It has been found that polychloroprene particles are a suitable filter means capable of selectively absorbing chlorinated hydrocarbons such as PCB's, from hydrocarbon oil, in excess of half their weight. This affinity and capacity has been demonstrated, in the laboratory, where the concentration of PCB's in hydrocarbon oil was less than 50 parts per million.

Other laboratory tests indicate that the rate at which the chlorinated organic contaminants can be removed from a functional liquid is inversely proportional to the concentration and the diffusivity of the contaminant in the liquid.

In a transformer apparatus embodying this invention, the transformer core and coil assembly includes an insulating medium in the coil which can be impregnated by the contaminant. The actual flow rate in this type of apparatus is not critical, as the rate is predominantly controlled by the availability of residual contaminant leaching from the solid insulating medium.

The filtering medium can be confined by placing the medium in a cartridge or container which is permeable to the functional liquid. In this regard a fine mesh cloth or container capable of retaining the filtering medium particles therein can be placed in the liquid.

Claims:

1.    A method of removing a halogenated organic contaminant from a liquid contained in a vessel characterised by placing in the vessel a chemical filtering medium capable of selectively absorbing said contaminant with minimum interaction with said liquid and allowing said liquid to communicate continuously with said medium.

2.    A process according to claim 1, wherein the liquid comprises a hydrocarbon oil.

3.    A process according to claim 1, wherein the liquid comprises a non-hydrocarbon organic liquid.

4.    A process according to claim 1, wherein the liquid comprises an inorganic compound.

5.    A process according to any one of claims 1 - 4, in which the liquid is caused to flow through the filtering medium by thermally induced circulation.

6.    A process according to claim 5, in which the vessel comprises an external reservoir in communication with a tank containing a functional subassembly immersed in the liquid.

7.    A process according to any preceding claim, in which the liquid is pumped continuously through the filtering medium in the external reservoir.

8.    A process according to any preceding claim, in which the filtering medium comprises a solid organic material.

9.    A process according to any preceding claim, in which the filtering medium comprises a chlorinated elastomeric polymer.

10.    A process according to claim 9, in which the filtering medium comprises small particles of chlorinated elastomeric polymer.

11. A process according to claim 9 or 10, in which the filtering medium comprises a chlorinated butadiene polymer.

12. A process according to claim 11, in which the filtering medium comprises a polychloroprene elastomeric polymer.

13. A process according to claim 9 or 10, in which the chlorinated elastomeric polymer is selected from the polymers and copolymers of polyvinyl chloride.

14. An apparatus comprising a storage vessel containing a liquid, a functional subassembly immersed in said liquid, said liquid containing a halogenated organic contaminant, characterised by a selectively absorbent filtering medium disposed in continuous communication with said liquid, said filtering medium being selected to absorb the contaminant with minimum interaction with the liquid.

15. An apparatus according to claim 14, wherein the filtering medium is formed from a solid organic material.

16. An apparatus according to claim 15, wherein said solid organic material is halogenated.

17. An apparatus according to claim 15, wherein the solid organic material is a chlorinated butadiene polymer.

18. An apparatus according to any one of claims 14 to 17, wherein the subassembly comprises contaminated electrical apparatus.

19. An apparatus according to any one of claims 14 to 18, wherein the filtering medium is contained in an external vessel in communication with a tank, said liquid being arranged to continuously flow through said external vessel.

20.   An apparatus according to any one of claims 14 to 19, wherein the contaminant is one or more chlorinated benzenes.

21.   An apparatus according to any one of claims 14 to 19, wherein the contaminant is one or more of the chlorinated pesticides.

22.   An apparatus according to any one of claims 14 to 21, wherein the functional subassembly comprises an agitation system in a sewage treatment plant, a transformer core-coil assembly, a hydraulic piston or a heat exchange assembly.

European Patent Office

**EUROPEAN SEARCH REPORT**

Application number

EP 80 30 2331

| Category | Citation of document with indication, where appropriate, of relevant passages | Relevant to claim |
|---|---|---|
| X | US – A – 4 124 834 (WALSH)<br>* Whole document * | 1,3–8,<br>14,15,<br>18,19,<br>22 |
| X | US – A – 3 429 104 (HIRSHFIELD)<br>* Whole document * | 1,4,8,<br>9,10,<br>13–16 |

**DOCUMENTS CONSIDERED TO BE RELEVANT**

**CLASSIFICATION OF THE APPLICATION (Int Cl ³)**

B 01 D 15/00
H 01 F 27/10

**TECHNICAL FIELDS SEARCHED (Int. Cl.³)**

B 01 D 15/00
       15/08
       39/00
       39/02
       39/04
H 01 F 27/10
       27/12

**CATEGORY OF CITED DOCUMENTS**

X: particularly relevant
A: technological background
O: non-written disclosure
P: intermediate document
T: theory or principle underlying
   the invention
E: conflicting application
D: document cited in the
   application
L: citation for other reasons

&: member of the same patent
   family,
   corresponding document

The present search report has been drawn up for all claims

| Place of search | Date of completion of the search | Examiner |
|---|---|---|
| The Hague | 04-11-1980 | HILD |

EPO Form 1503.1   06.78